# EUROPÄISCHE PATENTSCHRIFT

(11) **EP 1 727 844 B1**
(45) Veröffentlichungstag und Bekanntmachung des Hinweises auf die Patenterteilung: **07.01.2009**
(21) Anmeldenummer: 05716032.7
(22) Anmeldetag: 14.03.2005
(51) Int. Cl.: C08G 18/12, C08G 18/08, C08G 18/22, C09D 175/04, C09J 175/04, C08J 3/07

(54) **N-ETHYLPYRROLIDON IN DER HERSTELLUNG VON POLYURETHANDISPERSIONEN**
N-ETHYLPYRROLIDONE FOR PRODUCING POLYURETHANE DISPERSIONS
N-ETHYLPYRROLIDONE UTILISEE DANS LA PRODUCTION DE DISPERSIONS DE POLYURETHANNE

(30) Priorität: 15.03.2004 DE 102004012751; 18.03.2004 DE 102004013729; 25.03.2004 DE 102004015095; 25.03.2004 DE 102004015182; 25.03.2004 DE 102004015092
(43) Veröffentlichungstag der Anmeldung: 06.12.2006
(73) Patentinhaber: BASF SE, 67056 Ludwigshafen (DE)
(72) Erfinder: OTT, Karl, 68723 Plankstadt (DE); LICHT, Ulrike, 68309 Mannheim (DE); HÄBERLE, Karl, 67346 Speyer (DE)
(86) Internationale Anmeldenummer: PCT/EP2005/002687
(87) Internationale Veröffentlichungsnummer: WO 2005/090430

(56) Entgegenhaltungen:
- EP-A- 0 663 412
- EP-A- 1 396 510
- WO-A-00/73388
- DE-A1- 10 161 156
- DE-A1- 19 837 601
- US-A- 3 905 929
- US-A- 4 757 095
- US-B1- 6 455 611

## Beschreibung

Die vorliegende Erfindung betrifft N-Ethylpyrrolidon als Lösungsmittel zur Anwendung in Verfahren zur Herstellung von Polyurethandispersionen.

Polyurethandispersionen werden technisch häufig über das sog. "Präpolymer-Mischverfahren" hergestellt. Darin werden Polyurethane zunächst in einem organischen Lösungsmittel, häufig N-Methylpyrrolidon, hergestellt und die so erhaltene Lösung des Polyurethans anschließend in Wasser dispergiert. Während und/oder nach deren Dispergierung in Wasser kann dann mittels einer Kettenverlängerung die Molmasse des Polyurethans weiter erhöht werden.

Je nach Siedepunkt des verwendeten Lösungsmittels verbleibt das Lösungsmittel auch bei einer destillativen Abtrennung zu mehr oder minder großen Anteilen in der Dispersion und beeinflußt dort dann die Eigenschaften der Polyurethandispersion.

Da nicht alle Lösungsmittel toxikologisch unbedenklich sind, sollte das verwendete Lösungsmittel möglichst ungiftig sein.

Die Herstellung von Polyurethanen in N-Alkylpyrrolidonen und deren anschließende Dispergierung wird allgemein erwähnt beispielsweise in US 2004/28826, US 6,437,041, US 6,069,218, US 5,908,895, US 5,760,123, US 5,681,622, US 5,354,808, US 5,308,389, DE 44 13 562 und EP-A1 663 412. Als Lösungsmittel genannt und verwendet wird jedoch grundsätzlich ausschließlich N-Methylpyrrolidon, im Fall der EP-A1 663 412 wird auch N-Cyclohexylpyrrolidon genannt.

Die genannten Schriften offenbaren somit keine technische Lehre zum Einsatz von N-(Cyclo)Alkylpyrrolidonen im Präpolymer-Mischverfahren.

US 6,632,858, US 6,455,611, US 5,969,002, US 4,977,207 und CH 690 331 beschreiben die Herstellung von Polyurethanen in N-Methylpyrrolidon und anschließenden Zusatz von höheren N-Alkylpyrrolidonen, wie beispielsweise N-Ethylpyrrolidon, als Additiv erst nach der Dispergierung in Wasser. Der Zusatz der höheren N-Alkylpyrrolidone erfolgt erst in die fertige wäßrige Dispersion, um die Eigenschaften des Endproduktes einzustellen.

Nachteilig daran ist, dass man zur Herstellung dieser Dispersionen ein zweites Lösungsmittel verwenden muß, das entweder - im Falle, dass das Lösemittel leichter flüchtig als Wasser ist - durch Destillation aufwendig entfernt werden muß oder aber zu einem unerwünschten, erhöhtem Lösungsmittelgehalt des Endproduktes führt. EP-B1 891 399 offenbart N-Alkylpyrrolidone mit 8 - 18 Kohlenstoffatomen in der Alkylgruppe als oberflächenaktive Stoffe als Zumischung in u.a. Polyurethanen zur Entfernung von Beschichtungen.

Die N-Alkylpyrrolidone fungieren hier nicht als Lösungsmittel, sondern als oberflächenaktive Stoffe.

Aufgabe der vorliegenden Erfindung war es, Lösungsmittel zur Herstellung von Polyurethandispersionen mittels des "Präpolymer-Mischverfahrens" zur Verfügung zu stellen, die die Eigenschaften der entstehenden Polyurethandispersion positiv beeinflussen.

Diese erfindungsgemäße Aufgabe wird gelöst durch ein Verfahren zur Herstellung von wäßrigen Polyurethandispersionen, deren Anteil an N-Ethylpyrrolidon 30 Gew% nicht überschreitet, in dem man das Polyurethan vor der Dispergierung in Wasser in Gegenwart von N-Ethylpyrrolidon herstellt.

Die Menge an N-Ethylpyrrolidon bezogen auf das Polyurethan beträgt in der Regel 1 - 100 Gew.-%, bevorzugt 10 - 100 Gew.-%.

Selbstverständlich kann das erfindungsgemäß eingesetzte N-Ethylpyrrolidon auch mit einem oder mehreren anderen geeigneten Lösungsmitteln vermischt eingesetzt werden.

Geeignete Lösungsmittel sind beispielsweise solche mit einem Siedepunkt unterhalb von 100 °C. Bevorzugte Lösungsmittel mit einem Siedepunkt unter 100 °C sind Aceton, Tetrahydrofuran (THF) oder Butanon.

Bevorzugte geeignete Lösungsmittel sind solche mit einem Siedepunkt oberhalb von 100 °C. Besonders bevorzugt sind höhersiedende Ketone, Ether, wie z.B. Dioxan, Ethylen- und Propylenglykol dimethyl-, -diethyl- oder -di-n-butylether, Diethylen- und Dipropylenglycol dimethyl-, -diethyl- oder -di-n-butylether, oder Ester, wie z. B. 2-Methoxypropylacetat, 1-Methoxyprop-2-ylacetat, 3-n-Butoxy-, 3-Methoxy- oder 3-Ethoxypropionsäure methyl-, ethyl- oder -n-butylester.

Besonders bevorzugt sind Mischungen von N-Ethylpyrrolidon mit Dipropylenglycol dimethylether und/oder 2-Methoxypropylacetat.

Erfindungsgemäß stellt man die wäßrigen Polyurethandispersionen her durch
I. Herstellung eines Polyurethans durch Umsetzung von
   a) mindestens einem mehrwertigen Isocyanat mit 4 bis 30 C-Atomen,
   b) Diolen, von denen
      b1) 10 bis 100 mol-%, bezogen auf die Gesamtmenge der Diole (b), ein Molekulargewicht von 500 bis 5000 aufweisen, und
      b2) 0 bis 90 mol-%, bezogen auf die Gesamtmenge der Diole (b), ein Molekulargewicht von 60 bis 500 g/mol aufweisen,
   c) gegebenenfalls weiteren von den Diolen (b) verschiedenen mehrwertigen Verbindungen mit reaktiven Gruppen, bei denen es sich um alkoholische Hydroxylgruppen oder primäre oder sekundäre Aminogruppen handelt und
   d) von den Monomeren (a), (b) und (c) verschiedene Monomere mit wenigstens einer Isocyanatgruppe oder wenigstens einer gegenüber Isocyanatgruppen reaktiven Gruppe, die darüberhinaus wenigstens eine hydrophile Gruppen oder eine potentiell hydrophile Gruppe tragen, wodurch die Wasserdispergierbarkeit der Polyurethane bewirkt wird,
   zu einem Polyurethan in Gegenwart von N-Ethylpyrrolidon und
II. anschließender Dispergierung des Polyurethans in Wasser,
III. wobei man nach oder während Schritt II gegebenenfalls Polyamine zusetzen kann.

Als Monomere in (a) kommen die üblicherweise in der Polyurethanchemie eingesetzten Polyisocyanate in Betracht, beispielsweise aliphatische, aromatische und cycloaliphatische Di- und Polyisocyanate, wobei die aliphatischen Kohlenwasserstoffreste beispielsweise 4 bis 12 Kohlenstoffatome, und die cycloaliphatischen oder aromatischen Kohlenwasserstoffreste beispielsweise 6 bis 15 Kohlenstoffatome oder die araliphatischen Kohlenwasserstoffreste beispielsweise 7 bis 15 Kohlenstoffatome aufweisen, mit einer NCO Funktionalität von mindestens 1,8, bevorzugt 1,8 bis 5 und besonders bevorzugt 2 bis 4 in Frage, sowie deren Isocyanurate, Biurete, Allophanate und Uretdione.

Bei den Diisocyanaten handelt es sich bevorzugt um Isocyanate mit 4 bis 20 C-Atomen. Beispiele für übliche Diisocyanate sind aliphatische Diisocyanate wie Tetramethy-Iendiisocyanat, Hexamethylendiisocyanat (1,6-Diisocyanatohexan), Octamethylendiisocyanat, Decamethylendiisocyanat, Dodecamethylendiisocyanat, Tetradecamethy-Iendiisocyanat, Ester des Lysindiisocyanates, Tetramethylxylylendiisocyanat, Trimethylhexandiisocyanat oder Tetramethylhexandiisocyanat, cycloaliphatische Diisocyanate wie 1,4-, 1,3- oder 1,2-Diisocyanatocyclohexan, trans/trans-, das cis/cis- und das cis/trans-Isomere des 4,4'- oder 2,4'-Di(isocyanatocyclohexyl)methan, 1-Isocyanato-3,3,5- trimethyl-5-(isocyanatomethyl)cyclohexan (Isophorondiisocyanat), 2,2-Bis-(4-isocyanatocyclohexyl)-propan, 1,3- oder 1,4-Bis(isocyanatomethyl)cyclohexan oder 2,4-, oder 2,6-Diisocyanato-1-methylcyclohexan sowie aromatische Diisocyanat wie 2,4- oder 2,6-Toluylendiisocyanat und deren Isomerengemische, m- oder p-Xylylendiisocyanat, 2,4'- oder 4,4'-Diisocyanatodiphenylmethan und deren Isomerengemische, 1,3-oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldiphenylmethan-4,4'-diisocyanat, 1,4-Diisocyanatobenzol oder Diphenylether-4,4'-diisocyanat.

Es können auch Gemische der genannten Diisocyanate vorliegen.

Bevorzugt sind aliphatische und cycloaliphatische Diisocyanate, besonders bevorzugt sind Isophorondiisocyanat, Hexamethylendiisocyanat, meta-Tetramethylxylylendiisocyanat (m-TMXDI) und 1,1-Methylenbis-[4-isocyanato]-cyclohexan (H₁₂MDI).

Als Polyisocyanate kommen Isocyanuratgruppen aufweisende Polyisocyanate, Uretdiondiisocyanate, Biuretgruppen aufweisende Polyisocyanate, Urethan- oder Allophanatgruppen aufweisende Polyisocyanate, Oxadiazintriongruppen enthaltende Polyisocyanate, Uretonimin-modifizierte Polyisocyanate von geradlinigen oder verzweigten C₄-C₂₀-Alkylendiisocyanaten, cycloaliphatischen Diisocyanaten mit insgesamt 6 bis 20 C-Atomen oder aromatischen Diisocyanaten mit insgesamt 8 bis 20 C-Atomen oder deren Gemische in Betracht.

Die einsetzbaren Di- und Polyisocyanate haben bevorzugt einen Gehalt an Isocyanatgruppen (berechnet als NCO, Molekulargewicht = 42) von 10 bis 60 Gew.-% bezogen auf das Di- und Polyisocyanat(gemisch), bevorzugt 15 bis 60 Gew.-% und besonders bevorzugt 20 bis 55 Gew.-%.

Bevorzugt sind aliphatische bzw. cycloaliphatische Di- und Polyisocyanate, z.B. die vorstehend genannten aliphatischen bzw. cycloaliphatischen Diisocyanate, oder deren Mischungen.

Weiterhin bevorzugt sind
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 3 bis 4,5.
2) Uretdiondiisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Die Uretdiondiisocyanate können in den Zubereitungen als alleinige Komponente oder im Gemisch mit anderen Polyisocyanaten, insbesondere den unter 1) genannten, eingesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im allgemeinen einen NCO-Gehalt von 18 bis 22 Gew.-% und eine mittlere NCO-Funktionalität von 3 bis 4,5 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit mehrwertigen Alkoholen wie z.B. Trimethylolpropan, Neopentylglykol, Pentaerythrit, 1,4-Butandiol, 1,6-Hexandiol, 1,3-Propandiol, Ethylenglykol, Diethylenglykol, Glycerin, 1,2-Dihydroxypropan oder deren Gemischen erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 2,5 bis 3.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid herstellbar.
6) Uretonimin-modifizierte Polyisocyanate.

Die Polyisocyanate 1) bis 6) können im Gemisch, gegebenenfalls auch im Gemisch mit Diisocyanaten, eingesetzt werden.

Als Gemische dieser Isocyanate sind besonders die Mischungen der jeweiligen Strukturisomeren von Diisocyanatotoluol und Diisocyanato-diphenylmethan von Bedeutung, insbesondere ist die Mischung aus 20 mol-% 2,4 Diisocyanatotoluol und 80 mol-% 2,6-Diisocyanatotoluol geeignet. Weiterhin sind die Mischungen von aromatischen Isocyanaten wie 2,4 Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 4 : 1 bis 1 : 4 beträgt.

Als Verbindungen (a) kann man auch Isocyanate einsetzen, die neben den freien Isocyanatgruppen weitere verkappte Isocyanatgruppen, z.B. Uretdion- oder Urethangruppen tragen.

Gegebenenfalls können auch solche Isocyanate mitverwendet werden, die nur eine Isocyanatgruppe tragen. Im allgemeinen beträgt ihr Anteil maximal 10 mol-%, bezogen auf die gesamte Molmenge der Monomere. Die Monoisocyanate tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-α,α-dimethylbenzylisocyanat (TMI).

Als Diole (b) kommen vornehmlich höhermolekulare Diole (b1) in Betracht, die ein Molekulargewicht von etwa 500 bis 5000, vorzugsweise von etwa 100 bis 3000 g/mol haben.

Bei den Diolen (b1) handelt es sich insbesondere um Polyesterpolyole, die z.B. aus Ullmanns Encyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC- (CH₂)_{y}-COOH, wobei y eine Zahl von 1 bis 20, bevorzugt eine gerade Zahl von 2 bis 20 ist, z.B. Bernsteinsäure, Adipinsäure, Dodecandicarbonsäure und Sebacinsäure.

Als mehrwertige Alkohole kommen z.B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Neopentylglykol sowie Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die von Hydroxycarbonsäuren der allgemeinen Formel HO-(CH₂)_{z}-COOH, wobei z eine Zahl von 1 bis 20, bevorzugt eine ungerade Zahl von 3 bis 19 ist, abgeleitet sind, z.B. ε-Caprolacton, β-Propiolacton, γ-Butyrolacton und/oder Methyl-ε-caprolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Daneben kommen als Monomere (b1) Polyetherdiole in Betracht. Sie sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propan-1,2-diol, Propan-1,3-diol, 2,2-Bis(4-hydroxydiphenyl)-propan oder Anilin erhältlich. Besonders bevorzugt ist Polytetrahydrofuran mit einem Molekulargewicht von 500 bis 5000 g/mol, und vor allem 1000 bis 4500 g/mol.

Die Polyesterdiole und Polyetherdiole können auch als Gemische im Verhältnis 0,1 : 1 bis 1 : 9 eingesetzt werden.

Als Diole (b) können neben den Diolen (b1) noch niedermolekulare Diole (b2) mit einem Molekulargewicht von etwa 50 bis 500, vorzugsweise von 60 bis 200 g/mol, eingesetzt werden.

Als Monomere (b2) werden vor allem die Aufbaukomponenten der für die Herstellung von Polyesterpolyolen genannten kurzkettigen Alkandiole eingesetzt, wobei die unverzweigten Diole mit 2 bis 12 C-Atomen und einer gradzahligen Anzahl von C-Atomen sowie Pentandiol-1,5 und Neopentylglykol bevorzugt werden.

Bevorzugt beträgt der Anteil der Diole (b1), bezogen auf die Gesamtmenge der der Diolen (b) 10 bis 100 mol-% und der Anteil der Diole (b2), bezogen auf die Gesamtmenge der Diole (b) 0 bis 90 mol-%. Besonders bevorzugt beträgt das Verhältnis der Diole (b1) zu den Diolen (b2) 0,2 : 1 bis 5 : 1, besonders bevorzugt 0,5 : 1 bis 2 : 1.

Die Monomere (c), die von den Diolen (b) verschieden sind, dienen im allgemeinen der Vernetzung oder der Kettenverlängerung. Es sind im allgemeinen mehr als zweiwertige nicht-aromatische Alkohole, Amine mit 2 oder mehr primären und/oder sekundären Aminogruppen sowie Verbindungen, die neben einer oder mehreren alkoholischen Hydroxylgruppen eine oder mehrere primäre und/oder sekundären Aminogruppen tragen.

Alkohole mit einer höheren Wertigkeit als 2, die zur Einstellung eines gewissen Verzweigungs- oder Vernetzungsgrades dienen können, sind z.B. Trimethylolbutan, Trimethylolpropan, Trimethylolethan, Pentaerythrit, Glycerin, Zuckeralkohole, wie z.B. Sorbit, Mannit, Diglycerol, Threit, Erythrit, Adonit (Ribit), Arabit (Lyxit), Xylit, Dulcit (Galactit), Maltit oder Isomalt, oder Zucker.

Ferner kommen Monoalkohole in Betracht, die neben der Hydroxyl-Gruppe eine weitere gegenüber Isocyanaten reaktive Gruppe tragen wie Monoalkohole mit einer oder mehreren primären und/oder sekundären Aminogruppen, z.B. Monoethanolamin.

Polyamine mit 2 oder mehr primären und/oder sekundären Aminogruppen können im Präpolymer-Mischverfahren vor allem dann eingesetzt werden, wenn die Kettenverlängerung bzw. Vernetzung in Gegenwart von Wasser stattfinden soll (Schritt III), da Amine in der Regel schneller als Alkohole oder Wasser mit Isocyanaten reagieren. Das ist häufig dann erforderlich, wenn wäßrige Dispersionen von vernetzten Polyurethanen oder Polyurethanen mit hohem Molgewicht gewünscht werden. In solchen Fällen geht man so vor, daß man Präpolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Hierzu geeignete Amine sind im allgemeinen polyfunktionelle Amine des Molgewichtsbereiches von 32 bis 500 g/mol, vorzugsweise von 60 bis 300 g/mol, welche mindestens zwei primäre, zwei sekundäre oder eine primäre und eine sekundäre Aminogruppe enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan oder höhere Amine wie Triethylentetramin, Tetraethylenpentamin oder polymere Amine wie Polyethylenamine, hydrierte Poly-Acrylnitrile oder zumindest teilweise hydrolysierte Poly-N-Vinylformamide jeweils mit einem Molgewicht bis zu 2000, bevorzugt bis zu 1000 g/mol.

Die Amine können auch in blockierter Form, z.B. in Form der entsprechenden Ketimine (siehe z.B. CA-1 129 128), Ketazine (vgl. z.B. die US-A 4 269 748) oder Aminsalze (s. US-A 4 292 226) eingesetzt werden. Auch Oxazolidine, wie sie beispielsweise in der US-A 4 192 937 verwendet werden, stellen verkappte Polyamine dar, die für die Herstellung der Polyurethane zur Kettenverlängerung der Präpolymeren eingesetzt werden können. Bei der Verwendung derartiger verkappter Polyamine werden diese im allgemeinen mit den Präpolymeren,in Abwesenheit von Wasser vermischt und diese Mischung anschließend mit dem Dispersionswasser oder einem Teil des Dispersionswassers vermischt, so daß hydrolytisch die entsprechenden Polyamine freigesetzt werden.

Bevorzugt werden Gemische von Di- und Triaminen verwendet, besonders bevorzugt Gemische von Isophorondiamin und Diethylentriamin.

Der Anteil an Polyaminen kann bis zu 10, bevorzugt bis zu 8 mol-% und besonders bevorzugt bis zu 5 mol%, bezogen auf die Gesamtmenge der Komponenten (b) und (c) betragen.

Das im Schritt I hergestellte Polyurethan kann in der Regel bis zu 10 Gew.-%, bevorzugt bis zu 5 Gew.-% nicht abreagierte NCO-Gruppen aufweisen. Das molare Verhältnis von NCO-Gruppen im im Schritt I hergestellten Polyurethan zu der Summe aus primären und sekundären Aminogruppen im Polyamin wird im Schritt III in der Regel so gewählt, daß es zwischen 3 : 1 und 1 : 3, bevorzugt 2 : 1 und 1 : 2, besonders bevorzugt 1,5 : 1 und 1 1,5; ganz besonders bevorzugt bei 1:1 liegt.

Ferner können zum Kettenabbruch in untergeordneten Mengen, d.h. bevorzugt in Mengen von weniger als 10 mol-%, bezogen auf die Komponenten (b) und (c), Monoalkohole eingesetzt werden. Sie dienen hauptsächlich zur Begrenzung des Molgewichts des Polyurethans. Beispiele sind Methanol, Ethanol, iso-Propanol, n-Propanol, n-Butanol, iso-Butanol, sek-Butanol, tert-Butanol, Ethylenglykolmonomethylether, Ethylenglykolmonoethylether, 1,3-Propandiolmonomethylether, n-Hexanol, n-Heptanol, n-Octanol, n-Decanol, n-Dodecanol (Laurylalkohol) und 2-Ethylhexanol.

Um die Wasserdispergierbarkeit der Polyurethane zu erreichen, sind die Polyurethane neben den Komponenten (a), (b) und (c) aus von den Komponenten (a), (b) und (c) verschiedenen Monomere (d), die wenigstens eine Isocyanatgruppe oder wenigstens eine gegenüber Isocyanatgruppen reaktiven Gruppe und darüberhinaus wenigstens eine hydrophile Gruppe oder eine Gruppe, die sich in hydrophile Gruppen überführen läßt, tragen, aufgebaut. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer als die funktionellen Gruppen der Monomere, die zum Aufbau der Polymerhauptkette dienen. Bei den (potentiell) hydrophilen Gruppen kann es sich um nichtionische oder bevorzugt um ionische, d.h. kationische oder anionische, hydrophile Gruppen oder um potentiell ionische hydrophile Gruppen und besonders bevorzugt um anionische hydrophile Gruppen oder um potentiell anionische hydrophile Gruppen handeln.

Der Anteil der Komponenten mit (potentiell) hydrophilen Gruppen an der Gesamtmenge der Komponenten (a), (b), (c) und (d) wird im allgemeinen so bemessen, daß die Molmenge der (potentiell) hydrophilen Gruppen, bezogen auf die Gewichtsmenge aller Monomere (a) bis (b), 30 bis 1000, bevorzugt 50 bis 500 und besonders bevorzugt 80 bis 300 mmol/kg beträgt.

Als nichtionische hydrophile Gruppen kommen beispielsweise gemischte oder reine Polyethylenglykolether aus vorzugsweise 5 bis 100, bevorzugt 10 bis 80 Ethylenoxid-Wiederholungseinheiten in Betracht. Die Polyethylenglykolether können auch Propylenoxid-Einheiten enthalten. Ist dies der Fall, so soll der Gehalt an Propylen-oxid-Einheiten 50 Gew.%, bevorzugt 30 Gew.%, bezogen auf den gemischten Polyethylenglykolether, nicht übersteigen.

Der Gehalt an Polyethylenoxid-Einheiten beträgt im allgemeinen 0 bis 10, bevorzugt 0 bis 6 Gew.-%, bezogen auf die Gewichtsmenge aller Monomere (a) bis (d).

Bevorzugte Monomere mit nichtionischen hydrophilen Gruppen sind das Polyethylenglykol und Diisocyanate, die einen endständig veretherten Polyethylenglykolrest tragen. Derartige Diisocyanate sowie Verfahren zu deren Herstellung sind in den Patentschriften US 3 905 929 und US 3 920 598 angegeben.

Ionische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammonium-Gruppen, insbesondere protonierte tertiäre Aminogruppen oder quartäre Ammoniumgruppen.

Als Monomere mit potentiell anionischen Gruppen werden üblicherweise aliphatische, cycloaliphatische, araliphatische oder aromatische Mono- und Dihydroxycarbonsäuren in Betracht, die mindestens eine alkoholische Hydroxylgruppe oder eine primäre oder sekundäre Aminogruppe tragen.

Solche Verbindungen werden beispielsweise durch die allgemeine Formel

RG-R⁴-DG

dargestellt, worin
RG mindestens eine gegen Isocyanat reaktive Gruppe bedeutet,
DG mindestens eine dispergieraktive Gruppe und
R⁴ einen 1 bis 20 Kohlenstoffatome enthaltenden aliphatischen, cycloaliphatischen oder aromatischen Rest.

Beispiele für RG sind -OH, -SH, -NH₂ oder -NHR⁵, worin R⁵ Methyl, Ethyl, *iso*-Propyl, n-Propyl, n-Butyl, iso-Butyl, *sek*-Butyl, *tert*-Butyl, Cyclopentyl oder Cyclohexyl sein kann.

Bevorzugt handelt es sich bei solchen Komponente z.B. um Mercaptoessigsäure, Mercaptopropionsäure, Thiomilchsäure, Mercaptobernsteinsäure, Glycin, Iminodiessigsäure, Sarkosin, Alanin, β-Alanin, Leucin, Isoleucin, Aminobuttersäure, Hydroxyessigsäure, Hydroxypivalinsäure, Milchsäure, Hydroxybernsteinsäure, Hydroxydecansäure, Dimethylolpropionsäure, Dimethylolbuttersäure, Ethylendiamintriessigsäure, Hydroxydodecansäure, Hydroxyhexadecansäure, 12-Hydroxystearinsäure, Aminonaphthalincarbonsäure, Hydroxethansulfonsäure, Hydroxypropansulfonsäure, Mercaptoethansulfonsäure, Mercaptopropansulfonsäure, Aminomethansulfonsäure, Taurin, Aminopropansulfonsäure sowie deren Alkali- Erdalkali- oder Ammoniumsalze und besonders bevorzugt um die genannten Monohydroxycarbon- und -sulfonsäuren sowie Monoaminocarbon- und -sulfonsäuren.

Ganz besonders bevorzugt sind Dihydroxyalkylcarbonsäuren, vor allem mit 3 bis 10 Kohlenstoffatomen, wie sie auch in der US-A 3 412 054 beschrieben sind. Insbesondere sind Verbindungen der allgemeinen Formel

HO-R¹-CR³(COOH)-R²-OH

in welcher R¹ und R² für eine C₁- bis C₄-Alkandiyl-Einheit und R³ für eine C₁- bis C₄-Alkyl-Einheit steht. Vor allem sind Dimethylolbuttersäure und besonders Dimethylolpropionsäure (DMPA) bevorzugt.

Weiterhin eignen sich entsprechende Dihydroxysulfonsäuren und Dihydroxyphosponsäuren wie 2,3-Dihydroxypropanphosphonsäure sowie die entsprechenden Säuren, in denen mindestens eine Hydroxygruppe durch eine Aminogruppe ersetzt ist, beispielsweise solche der Formel

H₂N-R¹-CR³(COOH)-R²-NH₂

in welcher R¹, R² und R³ die gleichen Bedeutungen haben können, wie oben angeführt.

Ansonsten geeignet sind Dihydroxyverbindungen mit einem Molekulargewicht über 500 bis 10000 g/mol mit mindestens 2 Carboxylatgruppen, die aus der DE-A 4 140 486 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxyverbindungen sind insbesondere die als Kettenverlängerer aufgeführten Monomere (b2) sowie die Diole (b1) geeignet.

Potentiell ionische hydrophile Gruppen sind vor allem solche, die sich durch einfache Neutralisations-, Hydrolyse- oder Quatemisierungsreaktionen in die oben genannten ionischen hydrophilen Gruppen überführen lassen, also z.B. Säuregruppen, Anhydridgruppen oder tertiäre Aminogruppen.

Ionische Monomere (d) oder potenziell ionische Monomere (d) sind z.B. in Ullmanns Encyklopädie der technischen Chemie, 4. Auflage, Band 19, S.311-313 und beispielsweise in der DE-A 1 495 745 ausführlich beschrieben.

Als potentiell kationische Monomere (d) sind vor allem Monomere mit tertiären Aminogruppen von besonderer praktischer Bedeutung, beispielsweise: Tris-(hydroxyalkyl)-amine, N,N'-Bis(hydroxyalkyl)-alkylamine, N-Hydroxyalkyl-dialkylamine, Tris-(aminoalkyl)-amine, N,N'-Bis(aminoalkyl)-alkylamine, N-Aminoalkyl-dialkylamine, wobei die Alkylreste und Alkandiyl-Einheiten dieser tertiären Amine unabhängig voneinander aus 2 bis 6 Kohlenstoffatomen bestehen. Weiterhin kommen tertiäre Stickstoffatome aufweisende Polyether mit vorzugsweise zwei endständigen Hydroxylgruppen, wie sie z.B. durch Alkoxylierung von zwei an Aminstickstoff gebundene Wasserstoffatome aufweisende Amine, z.B. Methylamin, Anilin, oder N,N'-Dimethylhydrazin, in an sich üblicher Weise zugänglich sind, in Betracht. Derartige Polyether weisen im allgemeinen ein zwischen 500 und 6000 g/mol liegendes Molgewicht auf.

Diese tertiären Amine werden entweder mit Säuren, bevorzugt starken Mineralsäuren wie Phosphorsäure, Schwefelsäure oder Halogenwasserstoffsäuren, starken organischen Säuren, wie beispielsweise Ameisen-, Essig- oder Milchsäure, oder durch Umsetzung mit geeigneten Quaternisierungsmitteln wie C₁- bis C₆-Alkylhalogeniden, z.B. Bromiden oder Chloriden, oder Di-C₁- bis C₆-Alkylsulfaten oder Di-C₁- bis C₆-Alkylcarbonaten in die Ammoniumsalze überführt.

Als Monomere (d) mit gegenüber Isocyanaten reaktiven Aminogruppen kommen Aminocarbonsäuren wie Lysin, β-Alanin, die in der DE-A2034479 genannten Addukte von aliphatischen diprimären Diaminen an α,β-ungesättigte Carbonsäuren wie die N-(2-Aminoethyl)-2-aminoethancarbonsäure sowie die entsprechenden N-Aminoalkyl-aminoalkylcarbonsäuren, wobei die Alkandiyl-Einheiten aus 2 bis 6 Kohlenstoffatome bestehen, in Betracht.

Sofern Monomere mit potentiell ionischen Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Besonders bevorzugt liegen die anionischen hydrophilen Gruppen in Form ihrer Salze mit einem Alkaliion oder einem Ammoniumion als Gegenion vor.

Unter diesen genannten Verbindungen sind Hydroxycarbonsäuren bevorzugt, besonders bevorzugt sind Dihydroxyalkylcarbonsäuren, ganz besonders bevorzugt sind α,α-Bis(hydroxymethyl)carbonsäuren, insbesondere Dimethylolbuttersäure und Dimethylolpropionsäure und speziell Dimethylolpropionsäure.

In einer alternativen Ausführungsform können die Polyurethane sowohl nichtionische hydrophile als auch ionische hydrophile Gruppen, bevorzugt gleichzeitig nichtionische hydrophile und anionische hydrophile Gruppen enthalten.

Auf dem Gebiet der Polyurethanchemie ist allgemein bekannt, wie das Molekulargewicht der Polyurethane durch Wahl der Anteile der miteinander reaktiven Monomere sowie dem arithmetischen Mittel der Zahl der reaktiven funktionellen Gruppen pro Molekül eingestellt werden kann.

Normalerweise werden die Komponenten (a), (b), (c) und (d) sowie ihre jeweiligen Molmengen so gewählt, daß das Verhältnis A : B mit
A) der Molmenge an Isocyanatgruppen und
B) der Summe aus der Molmenge der Hydroxylgruppen und der Molmenge der funktionellen Gruppen, die mit Isocyanaten in einer Additionsreaktion reagieren können
0,5 : 1 bis 2 : 1, bevorzugt 0,8 : 1 bis 1,5, besonders bevorzugt 0,9 : 1 bis 1,2: 1 beträgt. Ganz besonders bevorzugt liegt das Verhältnis A : B möglichst nahe an 1 : 1.

Neben den Komponenten (a), (b), (c) und (d) werden Monomere mit nur einer reaktiven Gruppe im allgemeinen in Mengen bis zu 15 mol-%, bevorzugt bis zu 8 mol-%, bezogen auf die Gesamtmenge der Komponenten (a), (b), (c) und (d) eingesetzt.

Die Polyaddition der Komponenten (a) bis (d) erfolgt im allgemeinen bei Reaktionstemperaturen von 20 bis 180°C, bevorzugt 50 bis 150°C unter Normaldruck.

Die erforderlichen Reaktionszeiten können sich über wenige Minuten bis einige Stunden erstrecken. Es ist auf dem Gebiet der Polyurethanchemie bekannt, wie die Reaktionszeit durch eine Vielzahl von Parametern wie Temperatur, Konzentration der Monomere, Reaktivität der Monomeren beeinflußt wird.

Zur Beschleunigung der Reaktion der Diisocyanate können die üblichen Katalysatoren mitverwendet werden. Dafür kommen prinzipiell alle in der Polyurethanchemie üblicherweise verwendeten Katalysatoren in Betracht.

Diese sind beispielsweise organische Amine, insbesondere tertiäre aliphatische, cycloaliphatische oder aromatische Amine, und/oder Lewis-saure organische Metallverbindungen. Als Lewis-saure organische Metallverbindungen kommen z.B. Zinnverbindungen in Frage, wie beispielsweise Zinn-(II)-salze von organischen Carbonsäuren, z.B.

Zinn(II)-acetat, Zinn(II)-octoat, Zinn(II)-ethylhexoat und Zinn(II)-laurat und die Dialkylzinn(IV)-salze von organischen Carbonsäuren, z.B.Dimethylzinn-diacetat, Dibutylzinndiacetat, Dibutylzinn-dibutyrat, Dibutylzinn-bis(2-ethylhexanoat), Dibutylzinn-dilaurat, Dibutylzinn-maleat, Dioctylzinn-dilaurat und Dioctylzinn-diacetat. Auch Metallkomplexe wie Acetylacetonate des Eisens, Titans, Aluminiums, Zirkons, Mangans, Nickels und Cobalts sind möglich. Weitere Metallkatalysatoren werden von Blank et al. in Progress in Organic Coatings, 1999, Vol. 35, Seiten 19-29 beschrieben.

Bevorzugte Lewis-saure organische Metallverbindungen sind Dimethylzinn-diacetat, Dibutylzinn-dibutyrat, Dibutylzinn-bis(2-ethylhexanoat), Dibutylzinn-dilaurat, Diocytzinndilaurat, Zirkon-Acetylacetonat und Zirkon-2,2,6,6-tetramethyl-3,5-heptandionat.

Auch Wismut-und Cobaltkatalysatoren sowie Cäsiumsalze können als Katalysatoren eingesetzt werden. Als Cäsiumsalze kommen dabei solche Verbindungen in Betracht, in denen folgende Anionen eingesetzt werden: F⁻, Cl⁻, ClO⁻, ClO₃⁻, ClO₄⁻, Br⁻, J⁻, JO₃⁻, CN⁻, OCN⁻, NO₂⁻, NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht.

Bevorzugt sind dabei Cäsiumcarboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Besonders bevorzugte Cäsiumsalze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Formiat, Acetat, Propionat, Hexanoat und 2-Ethylhexanoat.

Als Polymerisationsapparate kommen Rührkessel in Betracht, insbesondere dann, wenn durch Mitverwendung von Lösungsmitteln für eine niedrige Viskosität und eine gute Wärmeabfuhr gesorgt ist.

Wird die Reaktion in Substanz durchgeführt, eignen sich aufgrund der meist hohen Viskositäten und der meist nur kurzen Reaktionszeiten besonders Extruder, insbesondere selbstreinigende Mehrschneckenextruder.

Im sogenannten "Präpolymer-Mischyerfahren" wird zunächst ein Präpolymer hergestellt wird, das Isocyanat-Gruppen trägt. Die Komponenten (a) bis (d) werden hierbei so gewählt, daß das definitionsgemäße Verhältnis A:B größer 1,0 bis 3, bevorzugt 1,05 bis 1,5 beträgt. Das Präpolymer wird zuerst in Wasser dispergiert und gleichzeitig und/oder anschließend durch Reaktion der Isocyanat-Gruppen mit Aminen, die mehr als 2 gegenüber Isocyanaten reaktive Aminogruppen tragen, vernetzt oder mit Aminen die 2 gegenüber Isocyanaten reaktive Aminogruppen tragen, kettenverlängert. Eine Kettenverlängerung findet auch dann statt, wenn kein Amin zugesetzt wird. In diesem Fall werden Isocyanatgruppen zu Amingruppen hydrolysiert, die mit noch verbliebenen Isocyanatgruppen der Präpolymere unter Kettenverlängerung abreagieren.

Die mittlere Teilchengröße (z-Mittelwert), gemessen mittels dynamischer Lichtstreuung mit dem Malvern® Autosizer 2 C, der erfindungsgemäß hergestellten Dispersionen ist nicht erfindungswesentlich und beträgt im allgemeinen <1000 nm, bevorzugt <500 nm , besonders bevorzugt < 200 nm und ganz besonders bevorzugt zwischen 20 und unter 200 nm.

Die Dispersionen haben im allgemeinen einen Feststoffgehalt von 10 bis 75, bevorzugt von 20 bis 65 Gew.-% und eine Viskosität von 10 bis 500 m Pas (gemessen bei einer Temperatur von 20°C und einer Schergeschwindigkeit von 250 s⁻¹.

Für manche Anwendungen kann es sinnvoll sein, die Dispersionen auf einen anderen, bevorzugt einen niedrigeren, Feststoffgehalt einzustellen, beispielsweise durch Verdünnung.

Weiterhin können die erfindungsgemäß hergestellten Dispersionen mit anderen für die angeführten Anwendungen typischen Komponenten vermischt werden, beispielsweise Tenside, Detergentien, Farbstoffe, Pigmente, Farbübertragungsinhibitoren und optische Aufheller.

Die Dispersionen können nach der Herstellung, falls gewünscht, einer physikalischen Desodorierung unterworfen werden.

Eine physikalische Desodorierung kann darin bestehen, daß die Dispersion mit Wasserdampf, einem sauerstoffhaltigen Gas, bevorzugt Luft, Stickstoff oder überkritischem Kohlendioxid beispielsweise in einem Rührbehälter, wie in der DE-AS 12 48 943 beschrieben, oder in einer Gegenstromkolonne, wie in der DE-A 196 21 027 beschrieben, gestrippt wird.

Die Menge an N-Ethylpyrrolidon bei der Herstellung des Polyurethans wird in der Regel so gewählt, daß der Anteil in der fertigen Dispersion 30 Gew.-% nicht überschreitet, bevorzugt nicht mehr als 25, besonders bevorzugt nicht mehr als 20 und ganz besonders bevorzugt nicht mehr als 15 Gew.-%.

Die erfindungsgemäßen wässrigen Polyurethanzubereitungen eignen sich in vorteilhafter Weise zum Beschichten und Verkleben von Substraten. Geeignete Substrate sind Holz, Holzfurnier, Papier, Pappe, Karton, Textil, Leder, Vlies, Kunststoffoberflächen, Glas, Keramik, mineralische Baustoffe, Metalle oder beschichtete Metalle. Sie finden Anwendung beispielsweise in der Herstellung von Filmen oder Folien, zum Imprägnieren von Textilien oder Leder, als Dispergiermittel, als Pigmentanreibemittel, als Primer, als Haftvermittler, als Hydrophobiermittel, als Waschmittelzusatz oder als Zusatz in kosmetischen Zubereitungen oder zur Herstellung von Formkörpern oder Hydrogelen.

Bei einer Verwendung als Beschichtungsmittel können die Polyurethandispersionen insbesondere als Grundierungen, Füller, pigmentierte Decklacke und Klarlacke im Bereich Autoreparatur- oder Großfahrzeuglackierung eingesetzt werden. Besonders geeignet sind die Beschichtungsmittel für Anwendungen, in denen eine besonders hohe Applikationssicherheit, Außenwitterungsbeständigkeit, Optik, Lösemittel-, Chemikalien- und Wasserfestigkeit gefordert werden, wie in der Autoreparatur- und Großfahrzeuglackierung.

Die erfindungsgemäße Herstellung der Polyurethane in Gegenwart von N-Ethylpyrrolidon führt zu mindestens einem der folgenden Vorteile:
- Verringerter Bedarf an Lösungsmittel.
- Die Dispersionen lassen sich leichter verspritzen oder verdüsen, da sich weniger Verkrustungen oder Verunreinigungen an Spritzwerkzeugen ablagern.
- geringere Toxizität als beispielsweise N-Methylpyrrolidon.
- Die Präpotymerlösungen weisen eine geringere Viskosität auf.
- Das rheologische Verhalten der Polyurethandispersionen wird verbessert.
- Das Benetzungsverhalten von Substraten oder Additiven wird verbessert.
- Geringere Vergilbung unter Licht und/oder Wärmeeinfluß.
- Höhere Frostbeständigkeit der Dispersionen.
- Verbesserte Flexibilität, insbesondere Kälteflexibilität der erhaltenen Filme.
- Höherer Glanz der erhaltenen Filme.

Während die nachträgliche Zugabe von N-Alkylpyrrolidonen, wie sie aus dem Stand der Technik bekannt ist, lediglich dem Einstellen von physikalischen Parametern der fertigen Dispersion gilt, führt die erfindungsgemäße Herstellung von Polyurethanen in Gegenwart von N-Ethylpyrrolidon zu Vorteilen bei der Herstellung der Polyurethane, die durch nachträgliche Zugabe nicht zu erreichen wären. Als Grund dafür könnte vermutet werden, daß die erfindungsgemäß hergestellten Polyurethane das N-Ethylpyrrolidon beispielsweise durch Quellen im gesamten Querschnitt aufnehmen, wohingegen bei nachträglicher Zugabe allenfalls eine oberflächliche Aufnahme erfolgen kann.

Ein weiterer Gegenstand der vorliegenden Erfindung sind Beschichtungsmassen, enthaltend mindestens eine erfindungsgemäße Polymerdispersion sowie damit beschichtete Gegenstände.

In dieser Schrift verwendete ppm- und Prozentangaben beziehen sich, falls nicht anders angegeben, auf Gewichtsprozente und -ppm.

## Patentansprüche

1. Verfahren zur Herstellung von wäßrigen Polyurethandispersionen, deren Anteil an N-Ethylpyrrolidon 30 Gew% nicht überschreitet, **dadurch gekennzeichnet, daß** man das Polyurethan vor der Dispergierung in Wasser in Gegenwart von N-Ethylpyrrolidon herstellt.

2. Verfahren gemäß Anspruch 1, umfassend die Schritte
I. Herstellung eines Polyurethans in Gegenwart von N-Ethylpyrrolidon durch Umsetzung von
a) mindestens einem mehrwertigen Isocyanat mit 4 bis 30 C-Atomen,
b) Diolen, von denen
b.1) 10 bis 100 mol-%, bezogen auf die Gesamtmenge der Diole (b), ein Molekulargewicht von 500 bis 5000 aufweisen, und
b.2) 0 bis 90 mol-%, bezogen auf die Gesamtmenge der Diole (b), ein Molekulargewicht von 60 bis 500 g/mol aufweisen,
c) gegebenenfalls weiteren, von den Diolen (b) verschiedenen, mehrwertigen Verbindungen mit reaktiven Gruppen, bei denen es sich um alkoholische Hydroxylgruppen oder primäre oder sekundäre Aminogruppen handelt und
d) von den Monomeren (a), (b) und (c) verschiedene Monomere mit wenigstens einer Isocyanatgruppe oder wenigstens einer gegenüber Isocyanatgruppen reaktiven Gruppe, die darüberhinaus wenigstens eine hydrophile Gruppen oder eine potentiell hydrophile Gruppe tragen, wodurch die Wasserdispergierbarkeit der Polyurethane bewirkt wird,
zu einem Polyurethan und
II. anschließender Dispergierung des Polyurethans in Wasser,
III. wobei man nach oder während Schritt II gegebenenfalls Polyamine zusetzen kann.

3. Verfahren gemäß Anspruch 2, **dadurch gekennzeichnet, daß** man als Komponente (d) mindestens eine Hydroxycarbonsäure einsetzt.

4. Verfahren nach Anspruch 3, **dadurch gekennzeichnet, daß** man als Komponente (d) mindestens eine Dihydroxyalkylcarbonsäure einsetzt.

5. Verfahren nach Anspruch 3, **dadurch gekennzeichnet, daß** man als Komponente (d) mindestens eine α,α-Bis(hydroxymethyl)carbonsäure einsetzt.

6. Verfahren nach Anspruch 3, **dadurch gekennzeichnet, daß** man als Komponente (d) Dimethylolbuttersäure und/oder Dimethylolpropionsäure einsetzt.

7. Verfahren nach Anspruch 3, **dadurch gekennzeichnet, daß** man als Komponente (d) Dimethylolpropionsäure einsetzt.

8. Verfahren nach einem der vorstehenden Ansprüche, **dadurch gekennzeichnet, dass** als Isocyanat mindestens ein (cyclo)aliphatisches Isocyanat eingesetzt wird.

9. Verfahren nach einem der vorstehenden Ansprüche, **dadurch gekennzeichnet, daß** als Komponenten (d) sowohl nichtionische hydrophile als auch ionische hydrophile Gruppen eingesetzt werden.

10. Verfahren nach einem der vorstehenden Ansprüche, **dadurch gekennzeichnet, daß** man die Herstellung des Polyurethans in Gegenwart mindestens eines Cäsiumsalzes durchführt.

11. Verwendung von wässrigen Polyurethandispersionen hergestellt nach einem der vorstehenden Ansprüche zum Beschichten und Verkleben von Holz, Holzfurnier, Papier, Pappe, Karton, Textil, Leder, Vlies, Kunststoffoberflächen, Glas, Keramik, mineralischen Baustoffen, Metallen oder beschichteten Metallen.

## Claims

1. A process for preparing an aqueous polyurethane dispersion whose N-ethylpyrrolidone content does not exceed 30% by weight, which comprises preparing the polyurethane prior to dispersing in water in the presence of N-ethylpyrrolidone.

2. The process according to claim 1, comprising the steps of
I. preparing a polyurethane in the presence of N-ethylpyrrolidone by reacting
a) at least one polyfunctional isocyanate having 4 to 30 carbon atoms,
b) diols of which
b.1) 10 to 100 mol%, based on the total amount of diols (b), have a molecular weight of from 500 to 5000 and
b.2) 0 to 90 mol%, based on the total amount of diols (b), have a molecular weight of from 60 to 500 g/mol,
c) if appropriate further polyfunctional compounds, other than the diols (b), containing reactive groups which are alcoholic hydroxyl groups or primary or secondary amino groups and
d) monomers other than the monomers (a), (b) and (c), containing at least one isocyanate group or at least one isocyanato-reactive group, additionally carrying at least one hydrophilic group or one potentially hydrophilic group whereby the polyurethane is rendered dispersible in water,
to form a polyurethane and
II. subsequently dispersing the polyurethane in water
III. with the possible addition after or during step II, if appropriate, of polyamines.

3. The process according to claim 2, wherein as component (d) at least one hydroxycarboxylic acid is used.

4. The process according to claim 3, wherein as component (d) at least one dihydroxyalkylcarboxylic acid is used.

5. The process according to claim 3, wherein as component (d) at least one α,α-bis(hydroxymethyl)carboxylic acid is used.

6. The process according to claim 3, wherein as component (d) dimethylolbutyric acid and/or dimethylolpropionic acid are/is used.

7. The process according to claim 3, wherein as component (d) dimethylolpropionic acid is used.

8. The process according to any one of the preceding claims, wherein as isocyanate at least one (cyclo)aliphatic isocyanate is used.

9. The process according to any one of the preceding claims, wherein as components (d) both nonionic hydrophilic and ionic hydrophilic groups are used.

10. The process according to any one of the preceding claims, wherein the polyurethane is prepared in the presence of at least one cesium salt.

11. The use of an aqueous polyurethane dispersion prepared according to any one of the preceding claims for coating or adhesively bonding wood, wood veneer, paper, paperboard, cardboard, textile, leather, nonwoven, plastics surfaces, glass, ceramic, mineral building materials, uncoated metals or coated metals.

## Revendications

1. Procédé pour la préparation de dispersions aqueuses de polyuréthane, dont la proportion de N-éthylpyrrolidone ne dépasse pas 30% en poids, **caractérisé en ce qu'**on prépare le polyuréthane avant la dispersion dans l'eau en présence de N-éthylpyrrolidone.

2. Procédé selon la revendication 1, comprenant les étapes
I. préparation d'un polyuréthane en présence de N-éthylpyrrolidone par transformation
a) d'au moins un isocyanate polyvalent comprenant 4 à 30 atomes de carbone,
b) de diols dont
b.1) 10 à 100% en mole, par rapport à la quantité totale des diols (b), présentent un poids moléculaire de 500 à 5000 g/mole, et
b.2) 0 à 90% en mole, par rapport à la quantité totale des diols (b), présentent un poids moléculaire de 60 à 500 g/mole,
c) le cas échéant d'autres composés différents des diols (b), polyvalents, présentant des groupes réactifs, où il s'agit de groupes hydroxyle alcooliques ou de groupes amino primaires ou secondaires et
d) de monomères différents des monomères (a), (b) et (c) avec au moins un groupe isocyanate ou au moins un groupe réactif par rapport aux groupes isocyanate, qui portent en outre au moins un groupe hydrophile ou un groupe potentiellement hydrophile, ce qui provoque la dispersibilité dans l'eau des polyuréthanes,
en un polyuréthane et
II. dispersion consécutive du polyuréthane dans l'eau,
III. où on peut le cas échéant ajouter des polyamines après ou pendant l'étape II.

3. Procédé selon la revendication 2, **caractérisé en ce qu'**on utilise comme composant (d) au moins un acide hydroxycarboxylique.

4. Procédé selon la revendication 3, **caractérisé en ce qu'**on utilise comme composant (d) au moins un acide dihydroxyalkylcarboxylique.

5. Procédé selon la revendication 3, **caractérisé en ce qu'**on utilise comme composant (d) au moins un acide α,α-bis(hydroxyméthyl)carboxylique.

6. Procédé selon la revendication 3, **caractérisé en ce qu'**on utilise comme composant (d) de l'acide diméthylolbutyrique et/ou de l'acide diméthylolpropionique.

7. Procédé selon la revendication 3, **caractérisé en ce qu'**on utilise comme composant (d) de l'acide diméthylolpropionique.

8. Procédé selon l'une quelconque des revendications précédentes, **caractérisé en ce qu'**on utilise comme isocyanate au moins un isocyanate (cyclo)aliphatique.

9. Procédé selon l'une quelconque des revendications précédentes, **caractérisé en ce qu'**on utilise comme composants (d) des groupes hydrophiles non ioniques ainsi que des groupes hydrophiles ioniques.

10. Procédé selon l'une quelconque des revendications précédentes, **caractérisé en ce qu'**on réalise la préparation du polyuréthane en présence d'au moins un sel de césium.

11. Utilisation de dispersions aqueuses de polyuréthane préparées selon l'une quelconque des revendications précédentes, pour le revêtement et le collage de bois, de placage de bois, de papier, de carton, de boîtes en carton, de textile, de cuir, de non-tissés, de surfaces en matériau synthétique, de verre, de céramique, de matériaux de construction minéraux, de métaux ou de métaux revêtus.
